# EUROPÄISCHE PATENTANMELDUNG

(11) **EP 1 229 359 A1**
(43) Veröffentlichungstag der Anmeldung: **07.08.2002**
(21) Anmeldenummer: 02450012.6
(22) Anmeldetag: 23.01.2002
(51) Int. Cl.: G02B 6/16, F21V 8/00

(54) **Optische Faserleitung**

(30) Priorität: 25.01.2001 AT 1192001; 25.01.2001 US 264047 P
(71) Anmelder: Bruchmann, Maria, 8271 Bad Waltersdorf 259 (AT)
(72) Erfinder: Bruchmann, Maria, 8271 Bad Waltersdorf 259 (AT)
(74) Vertreter: Gibler, Ferdinand, Dipl.Ing. Dr. techn.

(57) **Zusammenfassung**

Die Erfindung betrifft eine optische Faserleitung für Beleuchtungszwecke, wobei an einem Ende der Faserleitung eine elektromagnetische Welle von einer Lichtquelle, insbesondere eines Lasers, in die Faserleitung eingekoppelt wird. Dabei ist entlang der Faserleitung (1) wenigstens ein seitlicher Lichtaustritt (5, 6) vorgesehen.

## Beschreibung

Die Erfindung betrifft eine optische Faserleitung für Beleuchtungszwecke, wobei an einem Ende der Faserleitung eine elektromagnetische Welle von einer Lichtquelle, insbesondere eines Lasers, in die Faserleitung eingekoppelt wird.

Bei bekannten derartigen optischen Faserleitungen wird an einem Ende der Faserleitung eine elektromagnetische Welle von einer Lichtquelle eingekoppelt, welche am anderen Ende wieder austritt. Nachteilig ist, daß es nur einen punktförmigen Lichtaustritt gibt.

Aufgabe der Erfindung ist es, entlang einer Faserleitung mehrere Lichtaustritte bieten zu können.

Erfindungsgemäß wird dies dadurch bewirkt, daß entlang der Faserleitung wenigstens ein seitlicher Lichtaustritt vorgesehen ist.

Dadurch ergibt sich der Vorteil, daß nicht für jeden Lichtaustritt eine eigene Faserleitung gelegt werden muß und daher die Anzahl der Faserleitungen reduziert werden kann.

In Weiterführung der Erfindung kann vorgesehen sein, daß der seitliche Lichtaustritt im wesentlichen punktförmig ist.

Da eine herkömmliche Faserleitung am Ende einen punktförmigen Lichtaustritt aufweist, eignet sich ein punktförmiger seitlicher Lichtaustritt als Ersatz für eine zusätzliche herkömmliche Faserleitung.

In weiterer Ausgestaltung der Erfindung kann vorgesehen sein, daß wenigstens zwei im wesentlichen punktförmige seitliche Lichtaustritte so angeordnet sind, daß sich jeweils benachbarte im wesentlichen punktförmige seitliche Lichtaustritte zumindest teilweise überlagern.

Durch die Überlagerung mehrerer im wesentlichen punktförmiger seitlicher Lichtaustritte kann die Intensität der Beleuchtung vergrößert werden.

In Weiterführung der Erfindung kann vorgesehen sein, daß der seitliche Lichtaustritt linienförmig entlang eines Abschnitts der Faserleitung ausgebildet ist.

Durch die Verteilung der Strahlungsleistung auf einen größeren Bereich kann die Beleuchtung verbessert werden.

Gemäß einer anderen Ausführungsform der Erfindung kann der seitliche Lichtaustritt als Knickstelle ausgebildet sein.

Diese Ausführung des seitlichen Lichtaustrittes ermöglicht eine einfache Herstellung und bietet die Möglichkeit im Bereich des seitlichen Lichtaustrittes eine Richtungsänderung der Faserleitung auszuführen, die besonders platzsparend ist.

In weiterer Ausbildung der Erfindung kann vorgesehen sein, daß zumindest zwei Faserleitungen zu einem Faserbündel zusammengefaßt sind.

Das Zusammenfassen der Faserleitungen erleichtert das Einkoppeln der elektromagnetischen Welle aus einer gemeinsamen Lichtquelle.

In Weiterbildung der Erfindung kann die Faserleitung mit einem Gegenstand, wie z.B. einer Vase, einem Springbrunnen, einem Kerzenhalter, einem Bild u. dgl., verbunden sein.

Durch das Verbinden der Faserleitung mit einem Gegenstand können diese Gegenstände als Beleuchtungskörper verwendet werden.

Eine Variante der Erfindung kann darin bestehen, daß der Gegenstand ein Bild ist und sich zumindest ein Bereich der Faserleitung auf der Bildseite erstreckt.

Durch die Integration von zumindest einem Bereich der Faserleitung mit der Bildseite ergibt sich die Möglichkeit die Beleuchtung mit dem Inhalt des Bildes zu verbinden.

In einer anderen Ausführungsform der Erfindung kann vorgesehen sein, daß die Faserleitung durch die Maschen von Textilmaterialien, insbesondere gewebter Stoffe oder Leinwände, gezogen und zumindest teilweise in diese eingearbeitet ist.

Bei Textilmaterialien kann die Faserleitung durch die vorhandenen Maschen des Materials gezogen werden ohne dieses zu beschädigen. Durch das Einarbeiten kann eine haltbare Verbindung zwischen Faserleitung und Material ohne zusätzliche Mittel hergestellt werden.

Gemäß einer weiteren Ausführungsform der Erfindung kann vorgesehen sein, daß die Faserleitung in einem zumindest teilweise durchscheinenden Körper eingebettet ist.

Diese Ausführungsform bietet die Möglichkeit, die Faserleitung vor Beschädigung zu schützen und zumindest teilweise durchscheinende Körper der Verwendung als Beleuchtungskörper zugänglich zu machen.

In Weiterführung der Erfindung kann vorgesehen sein, daß die Faserleitung in zumindest teilweise durchscheinenden oder durchsichtigen Materialien, insbesondere Kunststoffen oder Glas, eingegossen ist.

Durch das Eingießen eines Teiles der Faserleitung kann diese bereits beim Herstellungsprozeß eines Gegenstandes mit diesem verbunden werden.

Eine Variante der Erfindung kann darin bestehen, daß die Faserleitung Teil einer Dekoration ist.

Durch die Verwendung einer Faserleitung sind keine Glühlampen im Bereich der Dekoration notwendig. Daher ist es nicht erforderlich, die Dekoration so zu gestalten, daß durchgebrannte Glühlampen ausgetauscht werden können.

Die Erfindung wird unter Bezugnahme auf die beigeschlossenen Zeichnungen, in welchen Ausführungsbeispiele einer erfindungsgemäßen Faserleitung dargestellt sind, näher beschrieben. Dabei zeigt:
Fig.1 einen Querschnitt durch eine Ausführungsform einer erfindungsgemäßen Faserleitung mit einem seitlichen Lichtaustritt;
Fig.2 eine Draufsicht auf ein Bild, bei dem sich ein Bereich der erfindungsgemäßen Faserleitung auf der Bildseite erstreckt.

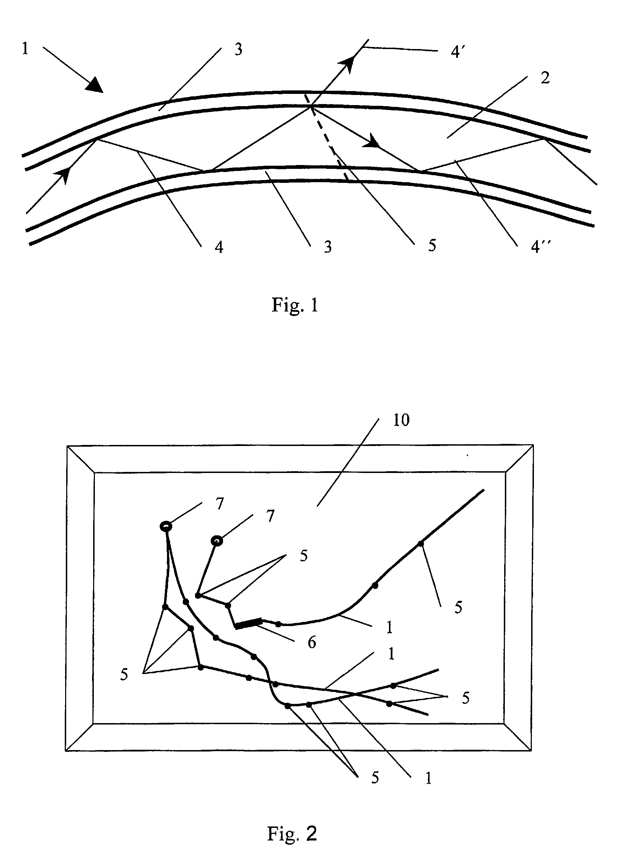

In Fig. 1 ist der prinzipielle Aufbau einer erfindungsgemäßen optischen Faserleitung 1, wobei an einem Ende der Faserleitung 1 eine elektromagnetische Welle von einer Lichtquelle, insbesondere eines Lasers, in die Faserleitung 1 eingekoppelt ist, dargestellt. Die Faserleitung 1 besteht aus einem Kern 2 und einer Ummantelung 3, welche unterschiedliche Brechungsindizes aufweisen. Die Funktionsweise der Faserleitung 1 ist, daß ein Lichtstrahl 4 einer elektromagnetischen Welle an der Grenzschichte zwischen dem Kern 2 und der Ummantelung 3 totalreflektiert wird. Bei einer anderen Ausführungsform der Erfindung weist die Faserleitung 1 keine scharfe Grenzschichte auf, sondern es gibt einen kontinuierlichen Übergang zwischen Kern 2 und Ummantelung 3.

Bei einer erfindungsgemäßen Faserleitung 1 ist ein seitlicher Lichtaustritt 5,6 vorgesehen. Ein Teil der einfallenden Lichtstrahlen 4 tritt seitlich als austretende Lichtstrahlen 4' aus der Faserleitung 1 aus, während ein anderer Teil der einfallenden Lichtstrahlen 4 als reflektierte Lichtstrahlen 4" in der Faserleitung 1 verbleiben.

Der seitliche Lichtaustritt 5,6 kann z.B. durch eine mechanische Knickung erzeugt werden, wobei vor allem ein im wesentlichen punktförmiger seitlicher Lichtaustritt 5 erreicht wird. Dabei wird der Krümmungsradius der Faserleitung 1 so weit verringert, daß das Material der Faserleitung 1 plastisch verformt wird. Dadurch verändert sich der Brechungsindex des Kerns 2 und/oder der Ummantelung 3, wodurch es an dieser Stelle im Bereich der Grenzschichte nicht mehr zu einer Totalreflexion und folglich zu einem seitlichen Austritt von Lichtstrahlen 4' kommt. Bei einer anderen Ausführungsform der Erfindung besteht der Kern 2 der Faserleitung 1 aus Glas, welches aufgrund der Knickung bricht. An der Bruchstelle wird ein Teil der einfallenden Lichtstrahlen 4 so abgelenkt, daß sie aus der Faserleitung 1 austreten. Durch die plastische Verformung bzw. durch die Bruchstelle bleibt der vorzugsweise im wesentlichen punktförmige seitliche Lichtaustritt 5 auch nach einer etwaigen Geraderichtung der Faserleitung 1 erhalten.

Bei einer weiteren Ausführungsform der Erfindung wird die Ummantelung 3 der Faserleitung 1 bis zur Grenzschichte abgetragen. Auch in diesem Fall kommt es in diesem Bereich zu keiner Totalreflexion, weshalb ein Teil der einfallenden Lichtstrahlen 4 seitlich aus der Faserleitung 1 austritt.

Werden mehrere im wesentlichen punktförmige seitliche Lichtaustritte 5 dicht aneinandergereiht, so ergibt sich der Effekt eines linienförmigen Lichtaustritts 6. Dieser Effekt entsteht dadurch, daß jeweils benachbarte im wesentlichen punktförmige seitliche Lichtaustritte 5 so angeordnet sind, daß sie sich zumindest teilweise überlagern. Durch das Abtragen der Ummantelung 3 entlang eines Abschnitts der Faserleitung 1 läßt sich ebenso ein linienförmiger Lichtaustritt 6 erreichen.

Um elektromagnetische Wellen aus einer Lichtquelle in mehrere Faserleitungen 1 einkoppeln zu können, können mehrere Faserleitungen 1 zu einem Faserbündel zusammengefaßt sein.

Mit der erfindungsgemäßen Faserleitung 1 ist es möglich, verschiedene Gegenstände als Beleuchtungskörper zu nutzen. So können die Faserleitungen 1 z.B. mit einer Vase, einem Springbrunnen, einem Kerzenhalter, einem Bild 10 und dergleichen, verbunden sein. Im Vergleich zu einem Beleuchtungskörper mit einer Anzahl von Glühlampen weist die Faserleitung 1 den Vorteil auf, daß bei den seitlichen Lichtaustritten 5 kein Glühdraht angebracht ist und demzufolge eine nur geringe Wärmeentwicklung auftritt. Bei Glühlampen tritt immer wieder der Fall auf, daß eine der Glühlampen durchbrennt, weshalb die Möglichkeit, die defekte Glühlampe auswechseln zu können, vorgesehen sein muß. Bei der Faserleitung 1 ist dies nicht erforderlich, da sie eine hohe Verschleißfestigkeit aufweist.

Da in der Faserleitung im Gegensatz zu einer Glühlampen kein elektrischer Strom fließt eignet sie sich auch für Naßräume. In diesem Zusammenhang können Badewannen, Duschbecken, Dusch- und Badewannenkabinen, Waschbecken und dergleichen als Beleuchtungskörper genutzt werden. Andere Ausführungsformen von Beleuchtungskörpern mit der erfindungsgemäßen Faserleitung 1 betreffen Vorhänge, Böden, Fließen, Wände, Decken und dergleichen.

Besonders gut kann die Faserleitung 1 geschützt werden, wenn sie in einem Körper eingebettet ist. Dazu ist erforderlich, daß dieser zumindest teilweise durchscheinend ist. Mögliche Ausführungsformen betreffen Flaschenkühler, Kerzenständer, Vasen und dergleichen. Diese Variante hat den Vorteil, daß die Faserleitung 1 vor mechanischer Beschädigung geschützt ist. Da die Faserleitung 1 keine Verschleißteile aufweist ist es nicht erforderlich, daß der eingebettete Bereich zugänglich ist.

Ein einfaches Herstellungsverfahren ergibt sich, wenn die Faserleitung 1 bei der Herstellung des Gegenstandes eingegossen werden kann. Dies ist z.B. für Gegenstände aus Kunststoffen oder Glas möglich

In Fig. 2 ist ein Bild 10 abgebildet, das einen Bereich der Faserleitung 1 auf der Bildseite aufweist. Die Faserleitung 1 kann dazu verwendet werden, Konturen herauszustreichen und so ein strukturierendes Element des Bildes 10 darstellen. Die punktförmigen seitlichen Lichtaustritte 5 der Faserleitungen 1 sind durch Punkte dargestellt. Weiters ist eine der Faserleitungen 1 mit linienförmigem Lichtaustritt 6 gezeigt. Die Faserleitungen 1 werden durch Durchtritte 7 von der Rückseite des Bildes 10 auf die Bildseite geführt. Für die Durchtritte 7 kann die Struktur des Bilduntergrundes, insbesondere ein Faserzwischenraum, genutzt werden. In einer anderen Ausführungsform der Erfindung ist vorgesehen, daß zumindest eine der Faserleitungen 1 an einem weiteren Durchtritt 7 wieder von der Bildseite auf die Rückseite des Bildes geführt wird. Eine weitere Ausführungsform der Erfindung sieht vor, daß wenigstens eine der Faserleitungen 1 über die Seite des Bildes 10, gegebenenfalls über den Rahmen, auf die Bildseite geführt wird.

Die Faserleitungen 1 können durch die Maschen einer Leinwand des Bildes 10, eines Textilgewebes oder dergleichen durchgefädelt werden. Eine gute Verbindung zwischen der Leinwand und der Faserleitung 1 läßt sich erzielen, wenn die Faserleitung 1 zumindest teilweise in die Struktur der Leinwand eingearbeitet wird. Die Faserleitung 1 läßt sich auch mit Klebern, insbesondere Silikonklebern, oder Acryl- oder Ölfarben am Bild befestigen. Dieses Verfahren der Befestigung der Faserleitung 1 ist für die meisten gewebten Materialien geeignet.

Eine weitere Anwendungsmöglichkeit der Faserleitung 1 gemäß der Erfindung betrifft die Verwendung zu Dekorationszwecken. Hierbei weist die Faserleitung 1 den Vorteil auf, daß sie im Gegensatz zu einer Lichterkette mit Glühlämpchen keine Verschleißteile aufweist. Herkömmliche Faserleitungen werden nur selten zu Dekorationszwecken verwendet, da für jeden Lichtpunkt eine eigene Faserleitung notwendig ist. Bei einer erfindungsgemäßen Faserleitung 1 können jedoch mehrere seitliche Lichtaustritte 5,6 vorgesehen sein, wodurch sich die Anzahl der benötigten Faserleitungen 1 erheblich reduziert.

## Patentansprüche

1. Optische Faserleitung für Beleuchtungszwecke, wobei an einem Ende der Faserleitung eine elektromagnetische Welle von einer Lichtquelle, insbesondere eines Lasers, in die Faserleitung eingekoppelt wird, **dadurch gekennzeichnet, daß** entlang der Faserleitung (1) wenigstens ein seitlicher Lichtaustritt (5, 6) vorgesehen ist.

2. Optische Faserleitung nach Anspruch 1, **dadurch gekennzeichnet, daß** der seitliche Lichtaustritt (5) im wesentlichen punktförmig ist.

3. Optische Faserleitung nach Anspruch 2, **dadurch gekennzeichnet, daß** wenigstens zwei im wesentlichen punktförmige seitliche Lichtaustritte (5) so angeordnet sind, daß sich jeweils benachbarte im wesentlichen punktförmige seitliche Lichtaustritte (5) zumindest teilweise überlagern.

4. Optische Faserleitung nach Anspruch 1, **dadurch gekennzeichnet, daß** der seitliche Lichtaustritt (6) linienförmigen entlang eines Abschnitts der Faserleitung (1) ausgebildet ist.

5. Optische Faserleitung nach einem der Ansprüche 1 bis 4, **dadurch gekennzeichnet, daß** der seitliche Lichtaustritt (5, 6) jeweils als Knickstelle ausgebildet ist.

6. Optische Faserleitung nach einem der Ansprüche 1 bis 5, **dadurch gekennzeichnet, daß** zumindest zwei Faserleitungen (1) zu einem Faserbündel zusammengefaßt sind.

7. Optische Faserleitung nach einem der Ansprüche 1 bis 6, **dadurch gekennzeichnet, daß** die Faserleitung (1) mit einem Gegenstand, wie z.B. einer Vase, einem Springbrunnen, einem Kerzenhalter, einem Bild (10) u. dgl., verbunden ist.

8. Optische Faserleitung nach Anspruch 7, **dadurch gekennzeichnet, daß** der Gegenstand ein Bild (10) ist und sich zumindest ein Bereich der Faserleitung (1) auf der Bildseite erstreckt.

9. Optische Faserleitung nach einem der Ansprüche 1 bis 8, **dadurch gekennzeichnet, daß** die Faserleitung (1) durch die Maschen von Textilmaterialien, insbesondere gewebter Stoffe oder Leinwände, gezogen und zumindest teilweise in diese eingearbeitet ist.

10. Optische Faserleitung nach einem der Ansprüche 1 bis 9, **dadurch gekennzeichnet, daß** die Faserleitung (1) in einem zumindest teilweise durchscheinenden Körper eingebettet ist.

11. Optische Faserleitung nach einem der Ansprüche 1 bis 10, **dadurch gekennzeichnet, daß** die Faserleitung (1) in zumindest teilweise durchscheinenden oder durchsichtigen Materialien, insbesondere Kunststoffen oder Glas, eingegossen ist.

12. Optische Faserleitung nach einem der Ansprüche 1 bis 11, **dadurch gekennzeichnet, daß** die Faserleitung (1) Teil einer Dekoration ist.
